# EUROPEAN PATENT SPECIFICATION

(11) **EP 1 569 131 B1**
(45) Date of publication and mention of the grant of the patent: **02.07.2008**
(21) Application number: 04004279.8
(22) Date of filing: 25.02.2004
(51) Int. Cl.: G06F 17/28

(54) **System and method of translation for wireless devices**
System und Verfahren zur Übersetzung für drahtlose Geräte
Dispositif er procédé de traduction pour des dispositifs sans fil

(43) Date of publication of application: 31.08.2005
(73) Proprietor: Research In Motion Limited, Waterloo, Ontario N2L 3W8 (CA)
(72) Inventor: Vuong, Thanh Vinh, Toronto Ontario, M3C 4A1 (CA)
(74) Representative: Rickard, David John

(56) References cited:
- EP-A- 1 298 535
- WO-A-02/082775
- ANONYMOUS: "SMS Translation" LINGOPHONE.COM, [Online] 8 January 2004 (2004-01-08), XP002299358 Retrieved from the Internet: URL:http://www.lingophone.com/faq.shtml> [retrieved on 2004-10-05]
- ANONYMOUS: "Real-time E-mail Translation" T-MAIL.COM, [Online] 13 February 2004 (2004-02-13), XP002299359 Retrieved from the Internet: URL:http://web.archive.org/web/20040213042 735/http://www.t-mail.com/index2.shtml> [retrieved on 2004-10-05]
- ANONYMOUS: "Altavista: Translations" BABELFISH.ALTAVISTA.COM, [Online] 12 December 1998 (1998-12-12), XP002299360 Retrieved from the Internet: URL:http://web.archive.org/web/19981212012 730/http://babelfish.altavista.com/> [retrieved on 2004-10-05]

## Description

### Field of the Invention

The present invention relates generally to translating a portion of text while composing text and more particularly to a system and method for multi-lingual translation of correspondence, such as email from a mobile device.

### Description of the Related Art

Mobile devices such as wireless communications devices providing data communications, voice communications or both in a wireless communication network are increasingly prevalent in current society. Such devices may also provide additional personal digital assistant (PDA) functions such as a calendar, alarm, contact lists, calculators, etc.

One feature available to many such devices providing data communications capabilities is text-based communications. These forms of communications included electronic mail (email), instant messaging (IM), and short messaging service (SMS), among others where a user sends text to another. Users may compose and send text-based email communications wirelessly as well as receive such communications. Occasionally, a user may desire to send an email in a language (i.e. a second language) which may not be the user's primary language (i.e. a first language) of communication. When composing the email, typing in the text, it is often difficult to remember a specific word or phrase to be typed in the second language. The user knows the word or phrase in the first language but does not remember the word (or its spelling) in the other language.

By way of example, consider the English sentence, "How are you today?" In French, the same sentence may be translated as, "Comment ça va aujourd'hui?"

In this example, the user may forget the French word "aujourd'hui" meaning "today" or forget how to spell it. It is therefore desirable to be able to provide the equivalent portion of text in a second language on the communications device if the user can remember the portion in a first language.

In addition, for persons whose first language is English, typing on a QWERTY keyboard in a different language is often much slower than typing in English, especially typing a phonetic language such as Chinese in accordance with one of the standard systems for representing symbols phonetically such as Mandarin Pinyin, Cantonese Pinyin, WuBiHua or CangJie. Anecdotal evidence suggests that it can take 3 - 5 times longer to type a sentence phonetically in Chinese then an equivalent sentence in English. One reason that it takes so long is that Chinese is a phonetic language having no alphabet but based on phonics to sound out words. Further, the language contains over 12,000 characters (symbols). It is difficult to memorize all of these characters to get a good grasp of the language to be able to communicate quickly and fluently. In addition, users might not be familiar with the different Chinese input methods (e.g., Mandarin Pinyin, Cantonese Pinyin, WuBiHua or CangJie). There is a steep learning curve for all of these methods and it may take a user a significant amount of time to recall a specific word or character from these methods when inputting text for a communication.

### GENERAL

It would therefore be desirable to have an easy method of inputting text from other languages (particularly non-English languages) to make the input process faster.

One might consider placing an entire translation dictionary (e.g., English to French, English to Chinese, etc) on the wireless communications device, but each of these dictionaries are large and memory intensive in relation to the typical amount of storage available on such devices; it is not a wise use of such limited memory. A system of text retrieval, using a wireless transport is expected to be more effective and efficient.

It is known to provide translation services over the Internet or the like for translating the textual content of emails and mobile phone text messages such as short messaging service (SMS) messages. Examples of such translation services are disclosed in, for example, WO02/082775, or "SMS Translation", Lingaphone.com (see www.lingaphone.com/faq.shtml) or "Real-time email translation", T-Mail.com (see www.t-mail.com/index2.shtml). In the systems disclosed in these references, an email or text message is composed on a computing or communications device and is transmitted to a translation service server. At the server, the textual content of the received email or SMS message is translated from a first, original language to a second, desired language.

The translated text of the received email or SMS message is transmitted to the user as a separate results email or SMS message whereby the user receives a translation of the whole text of their original message. There is no mechanism disclosed for translating portions of a message being composed, where said portions are to be translated into the main language of composition of the text message. EP1130523 on the other hand discloses a system that enables a user to select using a mouse, for example, a portion of a text the user wishes to be translated from one language to another. In response to a user actuation of a partial text translation option on a user interface, the system locates the selected text portion and sends it to a translation server.

Accordingly, there is a resulting need for a method and apparatus that addresses one or more of these shortcomings.

The present invention relates to translation of a portion of text to be communicated in a text-based communication in a communications network. A communications device for composing the text-based communication queries a translation service with a portion of text in a first language to obtain a replacement for the portion in a second language. A user triggers a replacement query by composing the portion using at least one trigger symbol monitored by the communications device. Replacement may be confirmed with the user and at least one alternative replacement sought in response to the confirmation. The communications network comprises a wireless network and the communications device a wireless mobile communications device.

In accordance with a first aspect of the invention, there is provided a method of translating text in a text-based communication to be transmitted from a wireless communications device, the device being coupled for communication in a wireless communications network, the method comprising the steps of: a user initiating composition of a text-based communication on the wireless communications device; determining text of the text-based communication to be translated; requesting a translation of the text to be translated from a translation service means coupled to the wireless communications device, the translation service means translating the text to be translated from a first language to a second language; and receiving the translated text in the second language at the wireless communications device; the method further comprising the steps of: continually monitoring to determine whether a send message request is received on the wireless communications device from the user; and if it is determined that a send message request has not been received, monitoring the text-based communication for the presence of a trigger symbol, the step of determining comprising determining the text to be translated as a portion of the text of the text-based communication from a trigger symbol associated with the portion whilst the communication is being composed, wherein the portion of text to be translated is indicated by at least one trigger symbol placed adjacent the portion; sending a request for the translation of the portion of text automatically from the wireless communications device to the translation service means upon determining the presence of the at least one trigger symbol whilst the communication is being composed; if it is determined that a send message request has been received, providing a prompt to receive a user response for each replacement translated portion of text; and once it is determined that there are no replacement translated portions of text requiring a user response, sending the message.

A user response to a replacement translated portion of text may comprise any of: an 'accept translation' whereby said replacement translated portion of text is used to replace a corresponding original portion of the text based communication; a 'reject translation' whereby an original portion of the text based communication corresponding to said replacement translated portion is retained instead of replacing it with said replacement translated portion of text; or a 'reject and ask for more' whereby a further request for translation of an original portion of text of the text based communication is formulated and sent to the translation service means to obtain one or more further replacement translated portions of text, the method further comprising providing a further prompt to receive a user response to said one or more further replacement translated portions of text. The further prompt may enable a user to select a specific one of said one or more further replacement translated portions of text to replace a corresponding original portion of the text based communication or to reject all of said one or more further replacement translated portions of text whereby said corresponding original portion of text is retained.

The method may include the step of composing the text-based communication in the second language and composing the portion of text to be translated in the first language.

The communications network may include a wireless network and, therefore, said requesting and receiving may comprise respectively transmitting said request for a translation and receiving the translated text over the wireless communications network in accordance with a wireless communication protocol.

In an embodiment, the method comprises maintaining a store of portions of text and respective replacement translated texts on said communications device; and using said store to determine the replacement translated text to be used to replace the portion of text. The portions of text and respective replacements may be defined by prior translations performed using the communications device.

In accordance with a second aspect of the invention, there is provided a system for translating text in a text-based communication to be transmitted from a wireless communications device, the wireless communications device being coupled for communication in a wireless communications network, the system comprising: means for enabling a user to initiate composition of a text-based communication on the wireless communications device; means for determining text of the text-based communication to be translated; means for requesting a translation of the text to be translated from a translation service means coupled to the wireless communications device, the translation service means translating the text to be translated from a first language to a second language; and means for receiving the translated text in the second language at the wireless communications device; the system further comprising: means for continually monitoring to determine whether a send message request is received on the wireless communications device from the user; means arranged to monitor the text-based communication for the presence of a trigger symbol if it is determined that a send message request has not been received; the means for determining being configured to determine the text to be translated as a portion of the text of the text-based communication from a trigger symbol associated with the portion whilst the communication is being composed, the portion of text to be translated being indicated by at least one trigger symbol placed adjacent the portion; means for sending a request for the translation of the portion of text automatically from the wireless communications device to the translation service means upon determining the presence of the at least one trigger symbol whilst the communication is being composed; means for providing a prompt to receive a user response for each replacement translated portion of text if it is determined that a send message request has been received; means for sending the message once it is determined that there are no replacement translated portions of text requiring a user response.

In accordance with a third aspect, there is provided a wireless communications device for wirelessly communicating text-based communications in a wireless communications network), the wireless communications device comprising: a composition component to compose text for communicating wirelessly in a text-based communication; means for determining text of the text-based communication to be translated; means for transmitting a translation request to a translation service means coupled to the wireless communications device, the translation service means translating the text to be translated from a first language to a second language; and means for receiving the translated text in the second language at the wireless communications device; the wireless communications device further comprising: means for continually monitoring to determine whether a send message request is received on the wireless communications device from the user; a monitoring component arranged to monitor the text-based communication for the presence of a trigger symbol if it is determined that a send message request has not been received; the means for determining being configured to determine the text to be translated as a portion of the text of the text-based communication from a trigger symbol associated with the portion whilst the communication is being composed, the portion of text to be translated being indicated by at least one trigger symbol placed adjacent the portion; and means for sending a request for the translation of the portion of text automatically from the wireless communications device to the translation service means upon determining the presence of the at least one trigger symbol whilst the communication is being composed; means for providing a prompt to receive a user response for each replacement translated portion of text if it is determined that a send message request has been received; means for sending the message once it is determined that there are no replacement translated portions of text requiring a user response.

In accordance with a fourth aspect, there is provided a computer readable medium comprising code means executable by a processor of a wireless communications device for causing the wireless communications device to implement the method in accordance with the first aspect of the invention.

Other aspects and features of the invention will be apparent from the appended claims and the description of a preferred embodiment.

### BRIEF DESCRIPTION OF THE DRAWINGS

Embodiments of the present invention will now be described by way of example with reference to attached figures, wherein:
FIG. 1 is a schematic diagram of a translation system architecture in accordance with an embodiment of the invention;
FIG. 2 is a detailed diagram of a preferred wireless communication device of FIG. 1 in accordance with an embodiment of the invention;
FIG. 3 is a flowchart of operations of a user interaction with a user interface of a communications device in accordance with an embodiment of the invention;
FIGS. 4A and 4B are flowcharts which describe a method for providing translation on a wireless communication device in accordance with an embodiment of the invention; and
FIG. 5 is a flowchart of operations of translation server providing a translation service in accordance with an embodiment of the invention.

### DESCRIPTION OF PREFERRED EMBODIMENTS

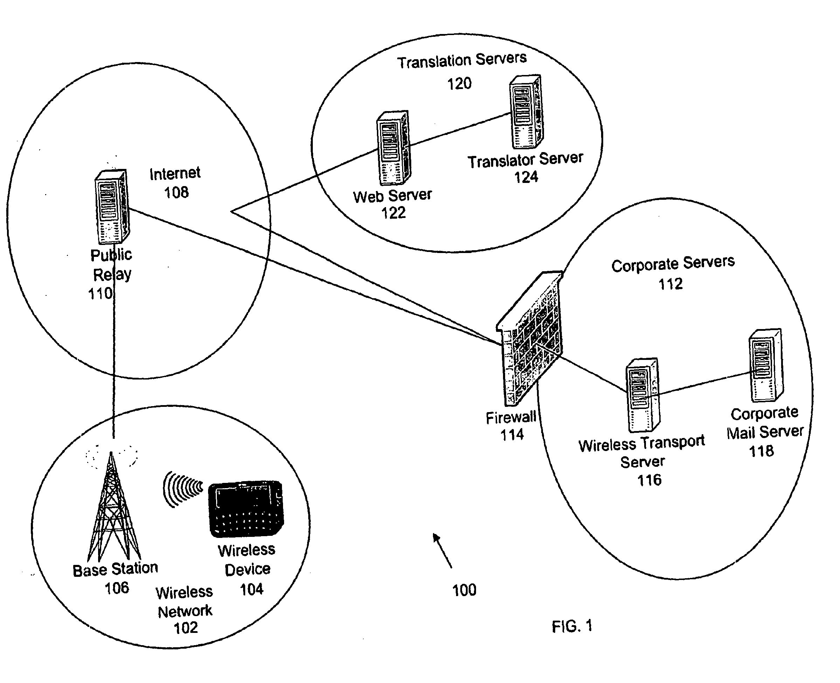

FIG. 1 is a schematic illustration of an architecture for a translation system 100 in accordance with an embodiment of the invention. Translation system 100 comprises a wireless communication device 104 coupled for communicating wirelessly with a wireless network base station 104 across a wireless network 102. Wireless network 102 may conform to any of the wireless network technologies and protocols capable of supporting data communications including cellular, wide-area network, GSM, GPRS, CDMA, iDEN™ , Mobitex™ , etc.

Wireless communication device 104 is capable of composing and sending data communications including text for delivery through wireless network 102 in accordance with one or more protocols implemented by the network 102. Text-based communications may comprise email, IM, SMS, direct data access or other protocols for such communications. Base station 106 is further coupled for communication to the public Internet 108 via a public relay 110 which receives messages from device 104 and directs the messages to corporate servers 112 providing data communications services to the wireless device. Corporate servers 112 are fronted by a firewall 114 and comprise a wireless transport server 116 and corporate email server 118. Wireless transport servers may include but are not limited to BlackBerry™ Enterprise Server, a wireless access protocol (WAP) gateway or a SMS server.

Though wireless transport server 116 is shown connected to corporate mail server 118 such as via a local area network (LAN) within an organization, wireless transport server 116 may be further connected to other application servers such as a web server 122 and a translator server 124 in the LAN environment behind firewall 114.

In the illustrated embodiment of this invention, the wireless transport server 116 sends a request to translation servers 120 through the corporate firewall 114, across the Internet 108 to the translation servers 120.

Translation servers 120 include a web server 122 that receives a request for translation which then passes it on to translator server 124 to translate the required request. Though illustrated as separate computing devices, persons of ordinary skill in the art will appreciate that any of corporate servers 112 and translation servers 120 and firewall 114 may be combined on one or more shared computing devices and that various design choices will dictate specific network topologies.

Once translation is completed, communication occurs in the reverse: translator server 124 sends the response to web server 122 to send via Internet 108 to wireless transport server 116 (through corporate firewall 114), which forwards the response across public relay 110, to wireless base station 106 to be delivered to the initiating application on wireless device 104.

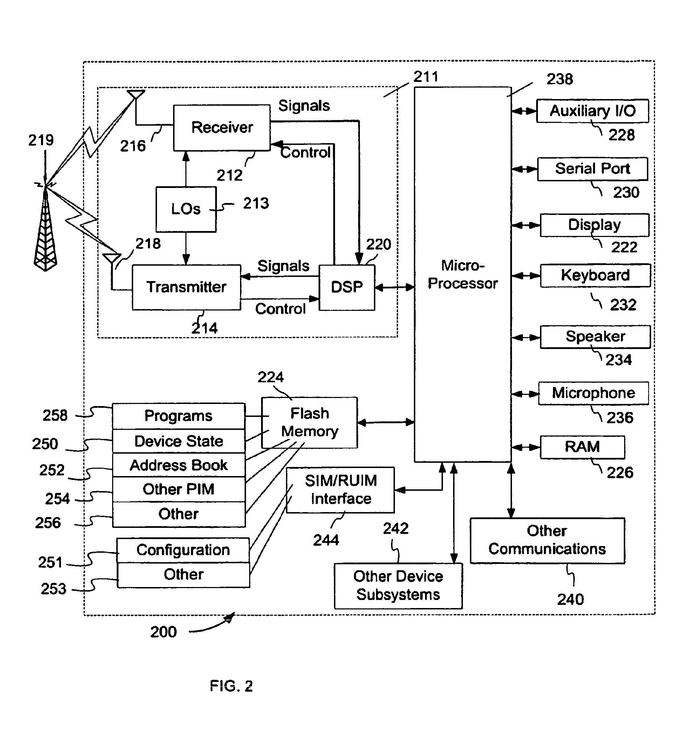

FIG. 2 is a block diagram illustrating an embodiment of wireless communications device 104 comprising a mobile electronic device 200 including preferred embodiments of the apparatus and method of the current application. Mobile electronic device 200 is preferably a two-way wireless electronic communication device having at least voice and data communication capabilities. Mobile electronic device 200 preferably has the capability to communicate with other computer systems on the Internet. Depending on the specific functionality provided, the wireless device may be referred to as a data messaging device, a two-way pager, a wireless e-mail device, a cellular telephone with data messaging capabilities, a wireless Internet appliance, or a data communication device, as examples.

Where mobile electronic device 200 is enabled for two-way communication, it incorporates a communication antenna subsystem 211, including both a receiver 212 and a transmitter 214, as well as associated components such as one or more, preferably embedded or internal, antenna elements 216 and 218, local oscillators (LOs) 213, and a processing module such as a digital signal processor (DSP) 220. As will be apparent to those skilled in the field of communications, the particular design of the communication subsystem 211 is dependent upon the protocols of the wireless communications network in which the device 200 is intended to operate.

Mobile electronic device 200 preferably includes a microprocessor 238 that controls the overall operation of the device. Communication functions, including at least data and preferably voice communications, are performed through communication subsystem 211. Microprocessor 238 also interacts with further device subsystems such as the display 222, flash memory 224, random access memory (RAM) 226, auxiliary input/output (I/O) subsystems 228, serial port 230, keyboard 232, speaker 234, microphone 236, a short-range communications subsystem 240 and any other device subsystems generally designated as 242.

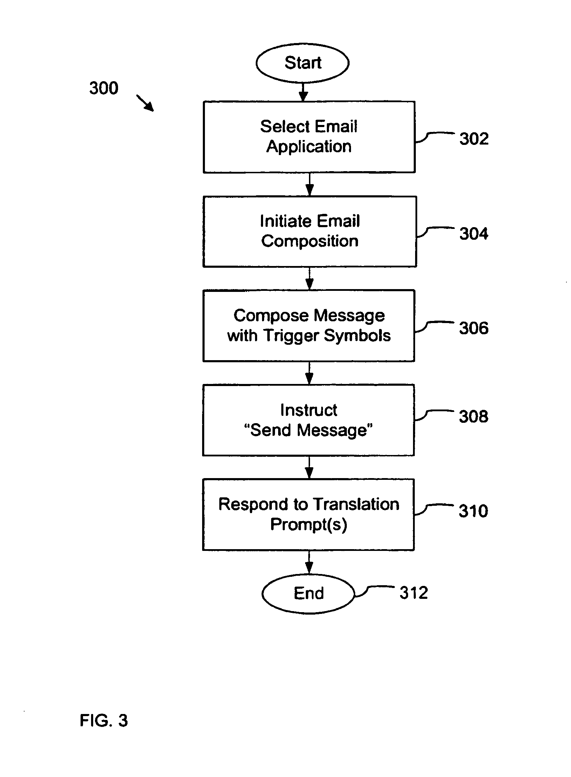

With reference to FIG. 3, there is shown a flowchart for operations 300 of a user interface providing selection and composition interaction with a mobile device, such as device 200, adapted for translating in accordance with an embodiment of the invention. In the present example, the mobile device is adapted for providing translation operations to at least email communications. Persons of ordinary skill in the art will appreciate that the invention is not limited to translation for email but may be adapted to other forms of data communication, including IM and SMS as previously noted.

In accordance with this embodiment, operations 300 commence when a user selects an application that provides translation, in this case, the email application (step 302). The user initiates the composition of an email message (step 304), for example by invoking a menu option, and composes the message using wildcards or trigger symbols to indicate a desired word or words to be translated and replaced in the email in accordance with the embodiment of the invention (step 306). A user may indicate a word or phrase for translation.

Though not shown, the user interface may be adapted to permit a user to select the languages for translating from and to and such information may be provided with a translation query as described below.

In the present embodiment, the trigger symbol is the asterisk character (*) and it is placed adjacent and around the portion of text to be replaced (i.e. immediately before and after the text, as in *today*). As part of the adaptation of the mobile device, there may be provided a wildcard monitor object that monitors the composition to recognize the wildcards and identify the portion of text to be translated and replaced. Persons of ordinary skill in the art will appreciate that other single or multiple symbols may be used and that depending on the sophistication of the monitoring operations and translation limitations, trigger symbols need not enclose the whole of the text to be replaced. For example, a single leading or trailing symbol could be used. A first specific symbol could indicate that the next word is to be replaced and a second specific symbol could indicate that the next two words are to be replaced. Other variations will be apparent.

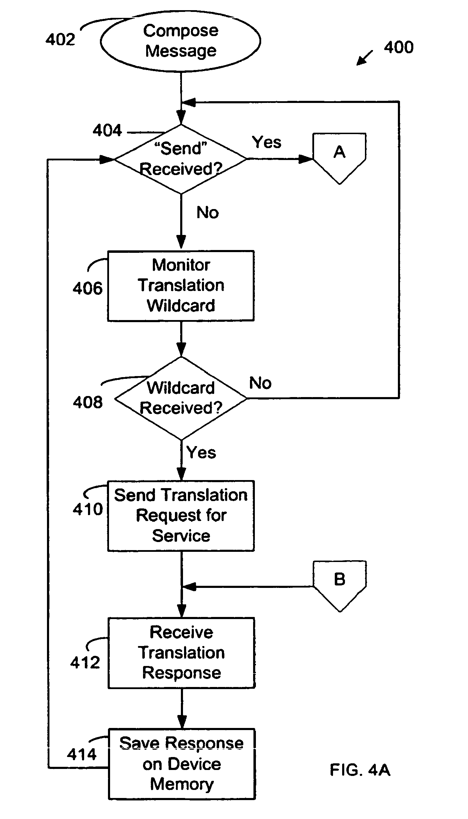

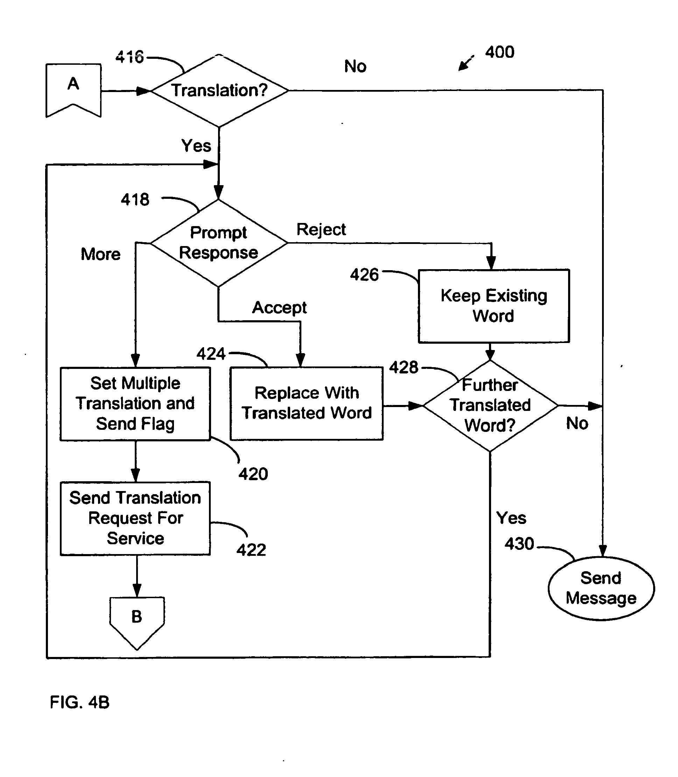

Though described further below with reference to FIGS. 4A and 4B, upon the wildcard monitor object's determination of the portion of text to be replaced, the mobile device formulates a query including the portion (and language information, if required) and sends the query for translation by the translation server 124. The mobile device receives a query response and stores the response for presentation to the user prior to sending the message.

When the user has finished composing and invokes a "send message" instruction operation for the message (step 308), the user interface provides a translation dialog prompt. A send instruction monitor may also be provided to enable this feature as discussed further below. At step 310 the user responds to the prompt for each portion of text to be replaced to confirm the replacement. In an embodiment of the prompt, there is provided three (3) choices for a user response: Yes (accept translation), No (reject translation) or No, retrieve other words (go back to the server to receive other choices).

Once the user has responded to the prompts and confirmed each translation replacement, the message may be sent and operations end (312).

FIGS. 4A and 4B illustrate operations of a mobile device providing a method of translation in accordance with the user interface operations described with reference to FIG. 3. Operations 400 start when a user initiates the composing of a message (step 402). A translation application component (e.g. a "Send Message" listener object) monitors to see whether a "Send Message" request (step 404) is received on device 200 from the user. If it is not received, another translation application component (e.g. a wildcard monitor object) monitors the email under composition for translation wildcards indicating a word or other portion of text to be replaced (step 406). If a wildcard is received (step 408) the device formulates a translation query request for the translation server 124 and sends translation request for a response (step 410). Optionally, the queries may include authorization information to authenticate a query request for translation service as discussed below.

If at step 408 no wildcard is received 408, the wildcard monitor object will continually monitor for one until one is received and the listener object will similarly monitor for send message instructions. Thus operations appear to loop via No branch at step 408 back to step 404 until one of a send and wildcard are received.

Following the Yes branch from step 410 to step 412, a response is received from the translation server 124 including a replacement for the portion of text to be translated and the response is reserved, such as by saving to a memory of the device, for later presentation to the user (step 414). At step 414, operations repeat from step 404. To facilitate management of queries and responses, each query that is generated may be created with two unique identifiers, one which identifies a particular translation matter and another that identifies the user. A response to a particular query may then return the unique identifiers to coordinate response and query matching.

At step 404, if a send message instruction is received from the user, then operations 400 continue via Yes branch to connecting reference A of FIG. 4B. Though not shown, the listener object may be adapted to listen for cancel instructions and cancel email composition accordingly.

With reference to FIG. 4B, operations 400 continue at step 416 where a determination is made whether a translation has been received. If it is determined that there is no translation at step 416, translation operations end and the email application may send the message. However if at least one translation response exists, a user interface component of the translation application prompts the user to confirm each translation response (step 418) as discussed above. The prompt provides three (3) choices 1. Accept; 2. Reject; and 3. Reject & Ask for More.

If the user choice is to reject the response word, the existing word in the first language is kept (step 426).

At step 428 a determination is made as to whether any additional responses require confirming. If there is no further response to confirm, translation may end and the device can send the message (step 430).

However if there is a further replacement to confirm (step 428), operations loop back to step 418 to prompt the user to confirm the replacement for the next portion of text to be replaced.

At step 418, if the user decides to accept the replacement to replace the portion of text, the existing portion is replaced (step 424) and operations continue at step 428 as described.

Lastly, at step 418, if the user instructs to get more translations, a further query for the existing portion of text is formulated including a multiple translation flag for sending to the translation servers (step 420) requesting more than one possible replacement, if available. A flag to force a send message instruction for the local device may also be set to ensure that operations at step 404 complete as necessary. The translation query request is sent for service (step 422) and operations 400 continue via reference B of Fig. 4A. With reference to FIG. 4A, at step 412, a multiple translation response is received and reserved in device memory at step 414. The response received may include a flag or other information denoting that the response is a multiple translation response. As described previously, operations loop back to step 404. The send flag triggers operations to continue via the yes branch back to step 416 as previously described.

Persons of ordinary skill in the art will recognize that operations of step 418 may be modified to account for a response having a plurality of replacements that may be used fro replacing the portion of text. For example, the prompt may allow a user to highlight and accept a specific replacement or reject all.

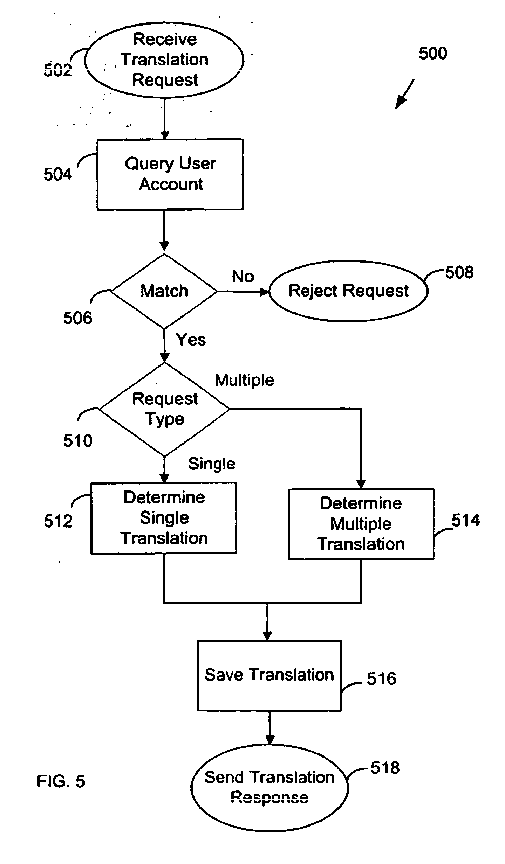

FIG. 5 illustrates operations 500 for a server translation method for translation servers 120 adapted in accordance with the present embodiment of the invention to provide a translation service. In the present embodiment, the translation service responds to requests for translation described above with reference to FIGs. 3, 4A and 4B.

Broadly, operations 500 commence with the receipt at the translation server 124 of a request for a word translation (step 502). In accordance with an optional feature, each request comprises authorization information, for example, a user account identifier or to facilitate authentication of the request. Steps 504 to 508 perform authentication, querying a user account store (not shown) of the translation servers 120 and determining whether there is a match. If no match is found at step 506, the request is rejected without a response at step 508. Other authorization techniques will be apparent to those of ordinary skill in the art.

Otherwise, at step 510, the request type is determined. If the request is for a response comprising a single translation of the word to be replaced, a single response is formulated (step 512).

If the request is for multiple translations (i.e., the user requests the translation servers to find at least one alternative replacement translation from which the user may chose a translation to replace the word to be translated), the operations formulate a multiple translation response, if possible (step 514). It is understood that some requested words may not have multiple translations and a response to a multiple translation request may repeat the earlier provided replacement.

Translation is performed using the portion of text provided in the query. Language information may be determined from the query or in other manners. For example, it may be associated with authorization information. Thus multi-lingual translation may be provided. Alternatively, queries for particular language pair translation may be directed to a dedicated server for the language pair.

From steps 512 or 514, the respective single or multiple translation response may be saved at step 516 and the response sent, ending operations 500. Saving, though optional, may be performed for a variety of advantages. One such advantages is facilitating a further search for the same word for the user, (e.g. multiple response search) which may provide quicker response times than seeking the translation from a remote store coupled to the translation server. As well, storing may be useful to provide statistical data such as detailed and/or aggregated information users, words and translations.

Advantageously, a major portion of the proposed translation operations can work in the background while a user composes an email. As such, when composition is completed the likelihood is increased that the translation service operations and the receipt of the response by the communications device are completed. Thereafter, the user confirms any replacement translation and the email is completed for sending.

Persons skilled in the art will recognize that the formulating and sending of translation requests by the mobile device may be performed upon demand from a user, for example, by invoking a translate message request option, or initiated upon receipt of the send message instruction rather than anticipated by the wildcard monitor as described. Such delayed rather than anticipated action may be preferred to avoid obtaining a translation of a word which a user does not require to be translated. Additionally, the wildcard monitoring object may be adapted to delay by a short period of time the preparation of a request following the detection of the triggers to permit a user to change or even delete the word to be translated. Should the translation request be sent too quickly upon detection of the trigger symbol, an undesired portion of the text may be translated. The portion may be undesired because it is premature due to an uncorrected spelling or because the user changes his or her mind about the content of the message.

Though the embodiments thus described relate to translation of portions of text for wireless data communications and include the wireless communication of translation requests and responses, persons of ordinary skill in the art will appreciate that the embodiments may be adapted to a wired environment. That is a computing device such as a personal computer, laptop, workstation, terminal, PDA or the like coupled for wire-based communication to the translation servers may be adapted for word translation in accordance with the teachings of the invention.

Additionally, in a further embodiment (not shown), the communications device may include a local dictionary stored to a memory of the device for looking up a replacement for a portion of text. The dictionary may comprise a subset of a larger translation dictionary such as common words. However, as noted previously, consideration of local memory availability may make a local store difficult for some devices. In yet a further embodiment (not shown), a local store of previously translated portions and replacements may be maintained by a device. The device may store the portions and replacements automatically or upon a confirmation of a user. As the local store fills an available allotted portion of local memory, one or more aging or frequency mechanisms may be used to free space for new portions and words. The device may then query its own local store before generating a query to a remote translation service coupled to the device.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method of translating text in a text-based communication to be transmitted from a wireless communications device (104; 200), the device being coupled for communication in a wireless communications network (102), the method comprising the steps of:
a user initiating composition of a text-based communication on the wireless communications device (104, 200);
determining text of the text-based communication to be translated;
requesting a translation of the text to be translated from a translation service means (100, 120, 122, 124) coupled to the wireless communications device, the translation service means translating the text to be translated from a first language to a second language; and
receiving the translated text in the second language at the wireless communications device (104; 200);
the method further comprising the steps of:
continually monitoring to determine whether a send message request is received on the wireless communications device (104, 200) from the user;
if it is determined that a send message request has not been received, monitoring the text-based communication for the presence of a trigger symbol, the step of determining comprising determining the text to be translated as a portion of the text of the text-based communication from a trigger symbol associated with the portion whilst the communication is being composed, wherein the portion of text to be translated is indicated by at least one trigger symbol placed adjacent the portion; and
sending a request for the translation of the portion of text automatically from the wireless communications device (104; 200) to the translation service means (100, 120, 122, 124) upon determining the presence of the at least one trigger symbol whilst the communication is being composed;
if it is determined that a send message request has been received, providing a prompt to receive a user response for each replacement translated portion of text; and
once it is determined that there are no replacement translated portions of text requiring a user response, sending the message.

2. The method of claim 1, wherein a user response to a replacement translated portion of text comprises any of:
an 'accept translation' whereby said replacement translated portion of text is used to replace a corresponding original portion of the text based communication;
a 'reject translation' whereby an original portion of the text based communication corresponding to said replacement translated portion is retained instead of replacing it with said replacement translated portion of text; or
a 'reject and ask for more' whereby a further request for translation of an original portion of text of the text based communication is formulated and sent to the translation service means (100, 120, 122, 124) to obtain one or more further replacement translated portions of text, the method further comprising providing a further prompt to receive a user response to said one or more further replacement translated portions of text.

3. The method of claim 2, wherein the further prompt enables a user to select a specific one of said one or more further replacement translated portions of text to replace a corresponding original portion of the text based communication or to reject all of said one or more further replacement translated portions of text whereby said corresponding original portion of text is retained.

4. The method of any one of claims 1 to 3, further comprising the step of composing the text-based communication in the second language and composing the portion of text to be translated in the first language.

5. The method of any one of claims 1 to 4, wherein the requesting and receiving comprise respectively transmitting the request for a translation and receiving the translated text over the wireless communications network (102) in accordance with a wireless communication protocol.

6. The method of claim 1, wherein the method further comprises the step of replacing the portion of text with the translated text received from the translation service means in the communication under composition.

7. The method of claim 6, wherein the step of replacing comprises a user utilising a user interface (222, 232, 236) of the wireless communications device to confirm the replacement of the portion of text with the received translated text.

8. The method of claim 7, wherein the step of confirming the replacement comprises obtaining at least one alternative replacement translated text from the translation service means (100, 120, 122, 124) and wherein the step of replacing further comprises replacing the portion of text with one of the translated text or the alternative replacement translated text.

9. The method of any one of claims 1 to 8, further comprising maintaining a store of portions of text and respective replacement translated texts on the wireless communications device (104; 200); and using the store to determine the replacement translated text to be used to replace the portion of text.

10. The method of claim 9, wherein the portions of text and respective replacement translated texts are defined by prior translations performed using the wireless communications device.

11. A system for translating text in a text-based communication to be transmitted from a wireless communications device (104; 200), the wireless communications device being coupled for communication in a wireless communications network (102), the system comprising:
means (238) for enabling a user to initiate composition of a text-based communication on the wireless communications device (104, 200);
means (238) for determining text of the text-based communication to be translated;
means (211) for requesting a translation of the text to be translated from a translation service means (100, 120, 121, 124) coupled to the wireless communications device (104; 200), the translation service means translating the text to be translated from a first language to a second language; and
means (211) for receiving the translated text in the second language at the wireless communications device (104; 200);
the system further comprising:
means (238) for continually monitoring to determine whether a send message request is received on the wireless communications device (104, 200) from the user;
means (238) arranged to monitor the text-based communication for the presence of a trigger symbol if it is determined that a send message request has not been received;
the means (238) for determining being configured to determine the text to be translated as a portion of the text of the text-based communication from a trigger symbol associated with the portion whilst the communication is being composed, the portion of text to be translated being indicated by at least one trigger symbol placed adjacent the portion;
means (211) for sending a request for the translation of the portion of text automatically from the wireless communications device (104; 200) to the translation service means (100, 120, 122, 124) upon determining the presence of the at least one trigger symbol whilst the communication is being composed;
means (238) for providing a prompt to receive a user response for each replacement translated portion of text if it is determined that a send message request has been received;
means (211) for sending the message once it is determined that there are no replacement translated portions of text requiring a user response.

12. The system of claim 11, wherein the means (238) for providing a prompt is configured to receive a user response to a replacement translated portion of text comprising any of:
an 'accept translation' whereby said replacement translated portion of text is used to replace a corresponding original portion of the text based communication;
a 'reject translation' whereby an original portion of the text based communication corresponding to said replacement translated portion is retained instead of replacing it with said replacement translated portion of text; or
a 'reject and ask for more' whereby a further request for translation of an original portion of text of the text based communication is formulated and sent to the translation service means (100, 120, 122, 124) to obtain one or more further replacement translated portions of text, the method further comprising providing a further prompt to receive a user response to said one or more further replacement translated portions of text.

13. The system of claim 12, wherein the means (238) for providing a prompt is configured to provide said further prompt to enable a user to select a specific one of said one or more further replacement translated portions of text to replace a corresponding original portion of the text based communication or to reject all of said one or more further replacement translated portions of text whereby said corresponding original portion of text is retained.

14. A wireless communications device (104; 200) for wirelessly communicating text-based communications in a wireless communications network (102), the wireless communications device comprising:
a composition component (238) to compose text for communicating wirelessly in a text-based communication;
means (238) for determining text of the text-based communication to be translated;
means (211) for transmitting a translation request to a translation service means (100, 120, 122, 124) coupled to the wireless communications device, the translation service means translating the text to be translated from a first language to a second language; and
means (211) for receiving the translated text in the second language at the wireless communications device (104; 200);
the wireless communications device further comprising:
means (238) for continually monitoring to determine whether a send message request is received on the wireless communications device (104, 200) from the user;
a monitoring component arranged to monitor the text-based communication for the presence of a trigger symbol if it is determined that a send message request has not been received;
the means for determining being configured to determine the text to be translated as a portion of the text of the text-based communication from a trigger symbol associated with the portion whilst the communication is being composed, the portion of text to be translated being indicated by at least one trigger symbol placed adjacent the portion;
means (211) for sending a request for the translation of the portion of text automatically from the wireless communications device (104; 200) to the translation service means (100, 120, 122, 124) upon determining the presence of the at least one trigger symbol whilst the communication is being composed;
means (238) for providing a prompt to receive a user response for each replacement translated portion of text if it is determined that a send message request has been received;
means (211) for sending the message once it is determined that there are no replacement translated portions of text requiring a user response.

15. The wireless communications device of claim 14, wherein the means (238) for providing a prompt is configured to receive a user response to a replacement translated portion of text comprising any of:
an 'accept translation' whereby said replacement translated portion of text is used to replace a corresponding original portion of the text based communication;
a 'reject translation' whereby an original portion of the text based communication corresponding to said replacement translated portion is retained instead of replacing it with said replacement translated portion of text; or
a 'reject and ask for more' whereby a further request for translation of an original portion of text of the text based communication is formulated and sent to the translation service means (100, 120, 122, 124) to obtain one or more further replacement translated portions of text, the method further comprising providing a further prompt to receive a user response to said one or more further replacement translated portions of text.

16. The wireless communications device of claim 15, wherein the means (238) for providing a prompt is configured to provide said further prompt to enable a user to select a specific one of said one or more further replacement translated portions of text to replace a corresponding original portion of the text based communication or to reject all of said one or more further replacement translated portions of text whereby said corresponding original portion of text is retained.

17. The wireless communications device of any one of claims 14 to 16, wherein the composition component is configured to compose a main part of the text of text based message in the second language and to compose portions to be translated in the first language.

18. The wireless communications device of claim 14, wherein the wireless communications device (104; 200) further comprises means for replacing the portion of text with the translated text received from the translation service means in the communication under composition.

19. The wireless communications device of claim 18, wherein the wireless communications device includes a user interface (222, 232, 236) to enable a user to confirm the replacement of the portion of the text to be translated with the translated text.

20. The wireless communications device of claim 19, wherein the wireless communications device is configured to obtain at least one alternative replacement translated text from the translation service means and wherein the user interface is adapted to confirm one of the translated text or the at least one alternative replacement text as the replacement text for the portion of text to be translated.

21. A computer readable medium comprising code means executable by a processor (238) of a wireless communications device for causing said wireless communications device to implement the method of any of claims 1 to 10.

## Patentansprüche

1. Verfahren zur Übersetzung von Text in einer textbasierten Kommunikation, die von einem drahtlosen Kommunikationsgerät (104; 200) übertragen werden soll, wobei das Gerät zur Kommunikation mit einem drahtlosen Kommunikationsnetz (102) gekoppelt ist, das Verfahren umfassend die folgenden Schritte:
das Initiieren der Erstellung einer textbasierten Kommunikation auf dem drahtlosen Kommunikationsgerät (104, 200) durch einen Benutzer;
das Ermitteln von zu übersetzendem Text in der textbasierten Kommunikation;
das Anfordern einer Übersetzung des zu übersetzenden Texts von einem mit dem drahtlosen Kommunikationsgerät gekoppelten Übersetzungsdienstmittel (100, 120, 122, 124), wobei das Übersetzungsdienstmittel den zu übersetzenden Text aus einer ersten Sprache in eine zweite Sprache übersetzt; und
das Empfangen des übersetzten Texts in der zweiten Sprache am drahtlosen Kommunikationsgerät (104; 200);
das Verfahren des Weiteren umfassend die folgenden Schritte:
das kontinuierliche Überwachen zur Ermittlung, ob von dem Benutzer eine Anforderung zum Nachrichtensenden auf dem drahtlosen Kommunikationsgerät (104, 200) empfangen wurde;
wenn ermittelt wird, dass keine Anforderung zum Nachrichtensenden empfangen wurde, das Überwachen der textbasierten Kommunikation auf das Vorhandensein eines Triggersymbols, wobei der Schritt des Ermittelns das Ermitteln des zu übersetzenden Texts als einen Textabschnitt der textbasierten Kommunikation von einem mit dem Abschnitt assoziierten Triggersymbol aus umfasst, während die Kommunikation erstellt wird, wobei der Abschnitt des zu übersetzenden Texts durch mindestens ein Triggersymbol angezeigt wird, das angrenzend an den Abschnitt platziert ist; und
das automatische Senden einer Anforderung für die Übersetzung des Textabschnitts von dem drahtlosen Kommunikationsgerät (104; 200) zu dem Übersetzungsdienstmittel (100, 120, 122, 124), wenn das Vorhandensein von mindestens einem Triggersymbol ermittelt wird, während die Kommunikation erstellt wird;
wenn ermittelt wird, dass eine Anforderung zum Nachrichtensenden empfangen wurde, das Bereitstellen einer Aufforderung zum Empfangen einer Benutzerreaktion für jeden übersetzten Ersetzungstextabschnitt; und
sobald ermittelt wird, dass es keine übersetzten Ersetzungstextabschnitte gibt, die eine Benutzerreaktion erfordern, das Senden der Nachricht.

2. Verfahren gemäß Anspruch 1, wobei eine Benutzerreaktion auf einen übersetzten Ersetzungstextabschnitt eine der folgenden umfasst:
ein 'Übersetzung akzeptieren', wodurch der übersetzte Ersetzungstextabschnitt verwendet wird, um einen entsprechenden Originaltextabschnitt der textbasierten Kommunikation zu ersetzen;
ein 'Übersetzung ablehnen', wodurch ein Originalabschnitt der textbasierten Kommunikation, der dem übersetzten Ersetzungstextabschnitt entspricht, beibehalten wird, anstatt durch den übersetzten Ersetzungstextabschnitt ersetzt zu werden; oder
ein 'Ablehnen und mehr anfordern', wodurch eine weitere Anforderung zur Übersetzung eines Originaltextabschnitts der textbasierten Kommunikation formuliert und zum Übersetzungsdienstmittel (100, 120, 122, 124) gesendet wird, um einen oder mehrere weitere übersetzte Ersetzungstextabschnitte zu erhalten, wobei das Verfahren des Weiteren das Bereitstellen einer weiteren Aufforderung zum Empfangen einer Benutzerreaktion für den einen oder die mehreren weiteren übersetzten Ersetzungstextabschnitte umfasst.

3. Verfahren gemäß Anspruch 2, wobei die weitere Aufforderung einem Benutzer ermöglicht, einen speziellen aus dem einen oder den mehreren weiteren übersetzten Ersetzungstextabschnitten auszuwählen, um einen entsprechenden Originaltextabschnitt der textbasierten Kommunikation zu ersetzen oder um alle des einen oder der mehreren weiteren übersetzten Ersetzungstextabschnitte abzulehnen, wodurch der entsprechende Originaltextabschnitt beibehalten wird.

4. Verfahren gemäß einem der Ansprüche 1 bis 3, des Weiteren umfassend den Schritt des Erstellens der textbasierten Kommunikation in der zweiten Sprache und des Erstellens des zu übersetzenden Textabschnitts in der ersten Sprache.

5. Verfahren gemäß einem der Ansprüche 1 bis 4, wobei das Anfordern und Empfangen das Übertragen der Anforderung für eine Übersetzung bzw. das Empfangen des übersetzten Texts über das drahtlose Kommunikationsnetz (102) gemäß einem Drahtloskommunikationsprotokoll umfassen.

6. Verfahren gemäß Anspruch 1, wobei das Verfahren des Weiteren den Schritt des Ersetzens des Textabschnitts durch den von dem Übersetzungsdienstmittel empfangenen übersetzten Text in der gerade in Erstellung befindlichen Kommunikation umfasst.

7. Verfahren gemäß Anspruch 6, wobei der Schritt des Ersetzens umfasst, dass ein Benutzer eine Benutzeroberfläche (222, 232, 236) des drahtlosen Kommunikationsgeräts einsetzt, um das Ersetzen des Textabschnitts durch den empfangenen übersetzten Text zu bestätigen.

8. Verfahren gemäß Anspruch 7, wobei der Schritt des Bestätigens der Ersetzung das Erhalten von mindestens einem alternativen übersetzten Ersetzungstext von dem Übersetzungsdienstmittel (100, 120, 122, 124) umfasst und wobei der Schritt des Ersetzens des Weiteren das Ersetzen des Textabschnitts durch entweder den übersetzten Text oder den alternativen übersetzten Ersetzungstext umfasst.

9. Verfahren gemäß einem der Ansprüche 1 bis 8, des Weiteren umfassend das Führen eines Speichers von Textabschnitten und den jeweiligen übersetzten Ersetzungstexten auf dem drahtlosen Kommunikationsgerät (104; 200); und das Verwenden des Speichers, um zu ermitteln, welcher übersetzte Ersetzungstext zur Ersetzung des Textabschnitts verwendet werden soll.

10. Verfahren gemäß Anspruch 9, wobei die Textabschnitte und die jeweiligen übersetzten Ersetzungstexte durch vorherige Übersetzungen definiert wurden, die mithilfe des drahtlosen Kommunikationsgeräts durchgeführt wurden.

11. System zur Übersetzung von Text in einer textbasierten Kommunikation, die von einem drahtlosen Kommunikationsgerät (104; 200) übertragen werden soll, wobei das drahtlose Kommunikationsgerät zur Kommunikation mit einem drahtlosen Kommunikationsnetz (102) gekoppelt ist, das System umfassend:
Mittel (238), die es einem Benutzer ermöglichen, die Erstellung einer textbasierten Kommunikation auf dem drahtlosen Kommunikationsgerät (104, 200) zu initiieren;
Mittel (238) zum Ermitteln von zu übersetzendem Text in der textbasierten Kommunikation;
Mittel (211) zum Anfordern einer Übersetzung des zu übersetzenden Texts von einem mit dem drahtlosen Kommunikationsgerät (104; 200) gekoppelten Übersetzungsdienstmittel (100, 120, 122, 124), wobei das Übersetzungsdienstmittel den zu übersetzenden Text aus einer ersten Sprache in eine zweite Sprache übersetzt; und
Mittel (211) zum Empfangen des übersetzten Texts in der zweiten Sprache am drahtlosen Kommunikationsgerät (104; 200);
das System des Weiteren umfassend:
Mittel (238) zum kontinuierlichen Überwachen zur Ermittlung, ob von dem Benutzer eine Anforderung zum Nachrichtensenden auf dem drahtlosen Kommunikationsgerät (104, 200) empfangen wurde;
Mittel (238), die eingerichtet sind zum Überwachen der textbasierten Kommunikation auf das Vorhandensein eines Triggersymbols, wenn ermittelt wird, dass keine Anforderung zum Nachrichtensenden empfangen wurde;
wobei die Mittel (238) zum Ermitteln dafür konfiguriert sind, den zu übersetzenden Text als einen Textabschnitt der textbasierten Kommunikation von einem mit dem Abschnitt assoziierten Triggersymbol aus zu ermitteln, während die Kommunikation erstellt wird, wobei der Abschnitt des zu übersetzenden Texts durch mindestens ein Triggersymbol angezeigt wird, das angrenzend an den Abschnitt platziert ist;
Mittel (211) zum automatischen Senden einer Anforderung für die Übersetzung des Textabschnitts von dem drahtlosen Kommunikationsgerät (104; 200) zu dem Übersetzungsdienstmittel (100, 120, 122, 124), wenn das Vorhandensein von mindestens einem Triggersymbol ermittelt wird, während die Kommunikation erstellt wird;
Mittel (238) zur Bereitstellung einer Anforderung zum Empfangen einer Benutzerreaktion für jeden übersetzten Ersetzungstextabschnitt, wenn ermittelt wird, dass eine Anforderung zum Nachrichtensenden empfangen wurde;
Mittel (211) zum Senden der Nachricht, sobald ermittelt wird, dass es keine übersetzten Ersetzungstextabschnitte gibt, die eine Benutzerreaktion erfordern.

12. System gemäß Anspruch 11, wobei das Mittel (238) zum Bereitstellen einer Aufforderung dafür konfiguriert ist, eine Benutzerreaktion auf einen übersetzten Ersetzungstextabschnitt zu empfangen, die eine der folgenden umfasst:
ein 'Übersetzung akzeptieren', wodurch der übersetzte Ersetzungstextabschnitt verwendet wird, um einen entsprechenden Originaltextabschnitt der textbasierten Kommunikation zu ersetzen;
ein 'Übersetzung ablehnen', wodurch ein Originalabschnitt der textbasierten Kommunikation, der dem übersetzten Ersetzungstextabschnitt entspricht, beibehalten wird, anstatt durch den übersetzten Ersetzungstextabschnitt ersetzt zu werden; oder
ein 'Ablehnen und mehr anfordern', wodurch eine weitere Anforderung zur Übersetzung eines Originaltextabschnitts der textbasierten Kommunikation formuliert und zum Übersetzungsdienstmittel (100, 120, 122, 124) gesendet wird, um einen oder mehrere weitere übersetzte Ersetzungstextabschnitte zu erhalten, wobei das Verfahren des Weiteren das Bereitstellen einer weiteren Aufforderung zum Empfangen einer Benutzerreaktion für den einen oder die mehreren weiteren übersetzten Ersetzungstextabschnitte umfasst.

13. System gemäß Anspruch 12, wobei die Mittel (238) zum Bereitstellen einer Aufforderung dazu konfiguriert sind, die weitere Aufforderung bereitzustellen, um es einem Benutzer zu ermöglichen, einen speziellen aus dem einen oder den mehreren weiteren übersetzten Ersetzungstextabschnitten auszuwählen, um einen entsprechenden Originaltextabschnitt der textbasierten Kommunikation zu ersetzen oder um alle des einen oder der mehreren weiteren übersetzten Ersetzungstextabschnitte abzulehnen, wodurch der entsprechende Originaltextabschnitt beibehalten wird.

14. Drahtloses Kommunikationsgerät (104; 200) zum drahtlosen Kommunizieren von textbasierten Kommunikationen in einem drahtlosen Kommunikationsnetz (102), das drahtlose Kommunikationsgerät umfassend:
eine Erstellungskomponente (238) zum Erstellen von Text zum drahtlosen Kommunizieren in einer textbasierten Kommunikation;
Mittel (238) zum Ermitteln von zu übersetzendem Text in der textbasierten Kommunikation;
Mittel (211) zum Übertragen einer Übersetzungsanforderung an ein mit dem drahtlosen Kommunikationsgerät gekoppeltes Übersetzungsdienstmittel (100, 120, 122, 124), wobei das Übersetzungsdienstmittel den zu übersetzenden Text aus einer ersten Sprache in eine zweite Sprache übersetzt; und
Mittel (211) zum Empfangen des übersetzten Texts in der zweiten Sprache am drahtlosen Kommunikationsgerät (104; 200);
das drahtlose Kommunikationsgerät des Weiteren umfassend:
Mittel (238) zum kontinuierlichen Überwachen zur Ermittlung, ob von dem Benutzer eine Anforderung zum Nachrichtensenden auf dem drahtlosen Kommunikationsgerät (104, 200) empfangen wurde;
eine Überwachungskomponente, die eingerichtet ist zum Überwachen der textbasierten Kommunikation auf das Vorhandensein eines Triggersymbols, wenn ermittelt wird, dass keine Anforderung zum Nachrichtensenden empfangen wurde;
wobei die Mittel zum Ermitteln dafür konfiguriert sind, den zu übersetzenden Text als einen Textabschnitt der textbasierten Kommunikation von einem mit dem Abschnitt assoziierten Triggersymbol aus zu ermitteln, während die Kommunikation erstellt wird, wobei der Abschnitt des zu übersetzenden Texts durch mindestens ein Triggersymbol angezeigt wird, das angrenzend an den Abschnitt platziert ist;
Mittel (211) zum automatischen Senden einer Anforderung für die Übersetzung des Textabschnitts von dem drahtlosen Kommunikationsgerät (104; 200) zu dem Übersetzungsdienstmittel (100, 120, 122, 124), wenn das Vorhandensein von mindestens einem Triggersymbol ermittelt wird, während die Kommunikation erstellt wird;
Mittel (238) zur Bereitstellung einer Anforderung zum Empfangen einer Benutzerreaktion für jeden übersetzten Ersetzungstextabschnitt, wenn ermittelt wird, dass eine Anforderung zum Nachrichtensenden empfangen wurde;
Mittel (211) zum Senden der Nachricht, sobald ermittelt wird, dass es keine übersetzten Ersetzungstextabschnitte gibt, die eine Benutzerreaktion erfordern.

15. Drahtloses Kommunikationsgerät gemäß Anspruch 14, wobei die Mittel (238) zum Bereitstellen einer Aufforderung dafür konfiguriert sind, eine Benutzerreaktion auf einen übersetzten Ersetzungstextabschnitt zu empfangen, die eine der folgenden umfasst:
ein 'Übersetzung akzeptieren', wodurch der übersetzte Ersetzungstextabschnitt verwendet wird, um einen entsprechenden Originaltextabschnitt der textbasierten Kommunikation zu ersetzen;
ein 'Übersetzung ablehnen', wodurch ein Originalabschnitt der textbasierten Kommunikation, der dem übersetzten Ersetzungstextabschnitt entspricht, beibehalten wird, anstatt durch den übersetzten Ersetzungstextabschnitt ersetzt zu werden; oder
ein 'Ablehnen und mehr anfordern', wodurch eine weitere Anforderung zur Übersetzung eines Originaltextabschnitts der textbasierten Kommunikation formuliert und zum Übersetzungsdienstmittel (100, 120, 122, 124) gesendet wird, um einen oder mehrere weitere übersetzte Ersetzungstextabschnitte zu erhalten, wobei das Verfahren des Weiteren das Bereitstellen einer weiteren Aufforderung zum Empfangen einer Benutzerreaktion für den einen oder die mehreren weiteren übersetzten Ersetzungstextabschnitte umfasst.

16. Drahtloses Kommunikationsgerät gemäß Anspruch 15, wobei die Mittel (238) zum Bereitstellen einer Aufforderung dazu konfiguriert sind, die weitere Aufforderung bereitzustellen, um es einem Benutzer zu ermöglichen, einen speziellen aus dem einen oder den mehreren weiteren übersetzten Ersetzungstextabschnitten auszuwählen, um einen entsprechenden Originaltextabschnitt der textbasierten Kommunikation zu ersetzen oder um alle des einen oder der mehreren weiteren übersetzten Ersetzungstextabschnitte abzulehnen, wodurch der entsprechende Originaltextabschnitt beibehalten wird.

17. Drahtloses Kommunikationsgerät gemäß einem der Ansprüche 14 bis 16, wobei die Erstellungskomponente dafür konfiguriert ist, einen Hauptteil des Texts der textbasierten Nachricht in der zweiten Sprache zu erstellen und zu übersetzende Abschnitte in der ersten Sprache zu erstellen.

18. Drahtloses Kommunikationsgerät gemäß Anspruch 14, wobei das drahtlose Kommunikationsgerät (104; 200) des Weiteren Mittel zum Ersetzen des Textabschnitts durch den von dem Übersetzungsdienstmittel empfangenen übersetzten Text in der gerade in Erstellung befindlichen Kommunikation umfasst.

19. Drahtloses Kommunikationsgerät gemäß Anspruch 18, wobei das drahtlose Kommunikationsgerät eine Benutzeroberfläche (222, 232. 236) enthält, die es einem Benutzer ermöglicht, das Ersetzen des zu übersetzenden Textabschnitts durch den übersetzten Text zu bestätigen.

20. Drahtloses Kommunikationsgerät gemäß Anspruch 19, wobei das drahtlose Kommunikationsgerät dafür konfiguriert ist, mindestens einen alternativen übersetzten Ersetzungstext von dem Übersetzungsdienstmittel zu erhalten, und wobei die Benutzeroberfläche dazu eingerichtet ist, entweder den übersetzten Text oder den mindestens einen alternativen Ersetzungstext als den Ersetzungstext für den zu übersetzenden Textabschnitt zu bestätigen.

21. Computerlesbares Medium, das Codemittel umfasst, die durch einen Prozessor (238) eines drahtlosen Kommunikationsgeräts ausgeführt werden können, um zu bewirken, dass das drahtlose Kommunikationsgerät das Verfahren gemäß einem der Ansprüche 1 bis 10 implementiert.

## Revendications

1. Un procédé pour traduire du texte dans une communication basée texte devant être transmise d'un dispositif de communication sans fil (104 ; 200), le dispositif étant couplé pour communiquer dans un réseau de communication sans fil (102), le procédé comportant les étapes suivantes :
un utilisateur entreprenant la composition d'une communication basée texte sur le dispositif de communication sans fil (104, 200) ;
déterminer le texte de la communication basée texte devant être traduit ;
requérir une traduction du texte devant être traduit d'un moyen de service de traduction (100, 120, 122, 124) couplé au dispositif de communication sans fil, le moyen de service de traduction traduisant le texte devant être traduit d'une première langue en une deuxième langue ; et
recevoir le texte traduit dans la deuxième langue au niveau du dispositif de communication sans fil (104 ; 200) ;
le procédé comportant de plus les étapes consistant à :
surveiller de façon continue afin de déterminer si une requête « envoyer message » est reçue sur le dispositif de communication sans fil (104, 200) de la part de l'utilisateur ;
s'il est déterminé qu'une requête « envoyer message » n'a pas été reçue, surveiller dans la communication basée texte la présence d'un symbole de déclenchement, l'étape de déterminer comportant déterminer le texte devant être traduit comme une portion du texte de la communication basée texte à partir d'un symbole de déclenchement associé à la portion pendant que la communication est en train d'être composée, où la portion de texte devant être traduite est indiquée par au moins un symbole de déclenchement placé de façon adjacente à la portion ; et
envoyer une requête de traduction de la portion de texte automatiquement à partir du dispositif de communication sans fil (104 ; 200) au moyen de service de traduction (100, 120, 122, 124) après avoir déterminé la présence de l'au moins un symbole de déclenchement pendant que la communication est en train d'être composée ;
s'il est déterminé qu'une requête « envoyer message » a été reçue, fournir une invite à recevoir une réponse d'utilisateur pour chaque portion de texte traduite de remplacement ; et
une fois qu'il est déterminé qu'il n'y a pas de portions de texte traduites de remplacement requérant une réponse d'utilisateur, envoyer le message.

2. Le procédé de la revendication 1, dans lequel une réponse d'utilisateur à une portion de texte traduite de remplacement comporte n'importe quel élément parmi :
un « accepter traduction » grâce auquel ladite portion de texte traduite de remplacement est utilisée pour remplacer une portion originale correspondante de la communication basée texte ;
un « refuser traduction » grâce auquel une portion originale de la communication basée texte correspondant à ladite portion traduite de remplacement est conservée au lieu de la remplacer par ladite portion de texte traduite de remplacement ; ou
un « refuser et demander plus » grâce auquel une requête supplémentaire de traduction d'une portion de texte originale de la communication basée texte est formulée et envoyée au moyen de service de traduction (100, 120, 122, 124) afin d'obtenir une ou plusieurs portion(s) de texte traduite(s) de remplacement supplémentaire(s), le procédé comportant de plus fournir une invite supplémentaire à recevoir une réponse d'utilisateur à ladite ou auxdites portion(s) de texte traduite(s) de remplacement supplémentaire(s).

3. Le procédé de la revendication 2, dans lequel l'invite supplémentaire permet à un utilisateur de sélectionner une portion spécifique parmi ladite ou lesdites portion(s) de texte traduite(s) de remplacement supplémentaire(s) pour remplacer une portion originale correspondante de la communication basée texte ou de refuser la totalité de ladite ou desdites portion(s) de texte traduite(s) de remplacement supplémentaire(s) grâce à quoi ladite portion de texte originale correspondante est conservée.

4. Le procédé de n'importe laquelle des revendications 1 à 3, comportant de plus l'étape consistant à composer la communication basée texte dans la deuxième langue et à composer la portion de texte devant être traduite dans la première langue.

5. Le procédé de n'importe laquelle des revendications 1 à 4, dans lequel la requête et la réception comportent respectivement transmettre la requête de traduction et recevoir le texte traduit par le réseau de communication sans fil (102) conformément à un protocole de communication sans fil.

6. Le procédé de la revendication 1, dans lequel le procédé comporte de plus l'étape consistant à remplacer la portion de texte par le texte traduit reçu du moyen de service de traduction dans la communication en cours de composition.

7. Le procédé de la revendication 6, dans lequel l'étape consistant à remplacer comporte l'utilisation par un utilisateur d'une interface utilisateur (222, 232, 236) du dispositif de communication sans fil pour confirmer le remplacement de la portion de texte par le texte traduit reçu.

8. Le procédé de la revendication 7, dans lequel l'étape consistant à confirmer le remplacement comporte obtenir au moins une variante de texte traduit de remplacement de la part du moyen de service de traduction (100, 120, 122, 124) et dans lequel l'étape consistant à remplacer comporte de plus remplacer la portion de texte soit par le texte traduit, soit par la variante de texte traduit de remplacement.

9. Le procédé de n'importe laquelle des revendications 1 à 8, comportant de plus tenir à jour un magasin des portions de texte et des textes traduits de remplacement respectifs sur le dispositif de communication sans fil (104 ; 200) ; et utiliser le magasin afin de déterminer le texte traduit de remplacement devant être utilisé pour remplacer la portion de texte.

10. Le procédé de la revendication 9, dans lequel les portions de texte et les textes traduits de remplacement respectifs sont définis par des traductions antérieures réalisées à l'aide du dispositif de communication sans fil.

11. Un système pour traduire du texte dans une communication basée texte devant être transmise d'un dispositif de communication sans fil (104 ; 200), le dispositif de communication sans fil étant couplé pour communiquer dans un réseau de communication sans fil (102), le système comportant :
des moyens (238) pour permettre à un utilisateur d'entreprendre la composition d'une communication basée texte sur le dispositif de communication sans fil (104, 200) ;
des moyens (238) pour déterminer le texte de la communication basée texte devant être traduit ;
des moyens (211) pour requérir une traduction du texte devant être traduit d'un moyen de service de traduction (100, 120, 122, 124) couplé au dispositif de communication sans fil (104 ; 200), le moyen de service de traduction traduisant le texte devant être traduit d'une première langue en une deuxième langue ; et
des moyens (211) pour recevoir le texte traduit dans la deuxième langue au niveau du dispositif de communication sans fil (104 ; 200) ;
le système comportant de plus :
des moyens (238) pour surveiller de façon continue afin de déterminer si une requête « envoyer message » est reçue sur le dispositif de communication sans fil (104, 200) de la part de l'utilisateur ;
des moyens (238) adaptés pour surveiller dans la communication basée texte la présence d'un symbole de déclenchement s'il est déterminé qu'une requête « envoyer message » n'a pas été reçue ;
les moyens (238) pour déterminer étant configurés afin de déterminer le texte devant être traduit comme une portion du texte de la communication basée texte à partir d'un symbole de déclenchement associé à la portion pendant que la communication est en train d'être composée, la portion de texte devant être traduite étant indiquée par au moins un symbole de déclenchement placé de façon adjacente à la portion ;
des moyens (211) pour envoyer une requête de traduction de la portion de texte automatiquement à partir du dispositif de communication sans fil (104 ; 200) au moyen de service de traduction (100, 120, 122, 124) après avoir déterminé la présence de l'au moins un symbole de déclenchement pendant que la communication est en train d'être composée ;
des moyens (238) pour fournir une invite à recevoir une réponse d'utilisateur pour chaque portion de texte traduite de remplacement s'il est déterminé qu'une requête « envoyer message » a été reçue ;
des moyens (211) pour envoyer le message une fois qu'il est déterminé qu'il n'y a pas de portions de texte traduites de remplacement requérant une réponse d'utilisateur.

12. Le système de la revendication 11, dans lequel les moyens (238) pour fournir une invite sont configurés afin de recevoir une réponse d'utilisateur à une portion de texte traduite de remplacement comportant n'importe quel élément parmi :
un « accepter traduction » grâce auquel ladite portion de texte traduite de remplacement est utilisée pour remplacer une portion originale correspondante de la communication basée texte ;
un « refuser traduction » grâce auquel une portion originale de la communication basée texte correspondant à ladite portion traduite de remplacement est conservée au lieu de la remplacer par ladite portion de texte traduite de remplacement ; ou
un « refuser et demander plus » grâce auquel une requête supplémentaire de traduction d'une portion de texte originale de la communication basée texte est formulée et envoyée au moyen de service de traduction (100, 120, 122, 124) afin d'obtenir une ou plusieurs portion(s) de texte traduite(s) de remplacement supplémentaire(s), le procédé comportant de plus fournir une invite supplémentaire à recevoir une réponse d'utilisateur à ladite ou auxdites portion(s) de texte traduite(s) de remplacement supplémentaire(s).

13. Le système de la revendication 12, dans lequel les moyens (238) pour fournir une invite sont configurés afin de fournir ladite invite supplémentaire pour permettre à un utilisateur de sélectionner une portion spécifique parmi ladite ou lesdites portion(s) de texte traduite(s) de remplacement supplémentaire(s) pour remplacer une portion originale correspondante de la communication basée texte ou de refuser la totalité de ladite ou desdites portion(s) de texte traduite(s) de remplacement supplémentaire(s) grâce à quoi ladite portion de texte originale correspondante est conservée.

14. Un dispositif de communication sans fil (104 ; 200) pour communiquer sans fil des communications basées texte dans un réseau de communication sans fil (102), le dispositif de communication sans fil comportant :
un composant de composition (238) pour composer du texte destiné à être communiqué sans fil dans une communication basée texte ;
des moyens (238) pour déterminer le texte de la communication basée texte devant être traduit ;
des moyens (211) pour transmettre une requête de traduction à un moyen de service de traduction (100, 120, 122, 124) couplé au dispositif de communication sans fil, le moyen de service de traduction traduisant le texte devant être traduit d'une première langue en une deuxième langue ; et
des moyens (211) pour recevoir le texte traduit dans la deuxième langue au niveau du dispositif de communication sans fil (104 ; 200) ;
le dispositif de communication sans fil comportant de plus :
des moyens (238) pour surveiller de façon continue afin de déterminer si une requête « envoyer message » est reçue sur le dispositif de communication sans fil (104, 200) de la part de l'utilisateur ;
un composant de surveillance adapté pour surveiller dans la communication basée texte la présence d'un symbole de déclenchement s'il est déterminé qu'une requête « envoyer message » n'a pas été reçue ;
les moyens pour déterminer étant configurés afin de déterminer le texte devant être traduit comme une portion du texte de la communication basée texte à partir d'un symbole de déclenchement associé à la portion pendant que la communication est en train d'être composée, la portion de texte devant être traduite étant indiquée par au moins un symbole de déclenchement placé de façon adjacente à la portion ;
des moyens (211) pour envoyer une requête de traduction de la portion de texte automatiquement à partir du dispositif de communication sans fil (104 ; 200) au moyen de service de traduction (100, 120, 122, 124) après avoir déterminé la présence de l'au moins un symbole de déclenchement pendant que la communication est en train d'être composée ;
des moyens (238) pour fournir une invite à recevoir une réponse d'utilisateur pour chaque portion de texte traduite de remplacement s'il est déterminé qu'une requête « envoyer message » a été reçue ;
des moyens (211) pour envoyer le message une fois qu'il est déterminé qu'il n'y a pas de portions de texte traduites de remplacement requérant une réponse d'utilisateur.

15. Le dispositif de communication sans fil de la revendication 14, dans lequel les moyens (238) pour fournir une invite sont configurés afin de recevoir une réponse d'utilisateur à une portion de texte traduite de remplacement comportant n'importe quel élément parmi :
un « accepter traduction » grâce auquel ladite portion de texte traduite de remplacement est utilisée pour remplacer une portion originale correspondante de la communication basée texte ;
un « refuser traduction » grâce auquel une portion originale de la communication basée texte correspondant à ladite portion traduite de remplacement est conservée au lieu de la remplacer par ladite portion de texte traduite de remplacement ; ou
un « refuser et demander plus » grâce auquel une requête supplémentaire de traduction d'une portion de texte originale de la communication basée texte est formulée et envoyée au moyen de service de traduction (100, 120, 122, 124) afin d'obtenir une ou plusieurs portion(s) de texte traduite(s) de remplacement supplémentaire(s), le procédé comportant de plus fournir une invite supplémentaire à recevoir une réponse d'utilisateur à ladite ou auxdites portion(s) de texte traduite(s) de remplacement supplémentaire(s).

16. Le dispositif de communication sans fil de la revendication 15, dans lequel les moyens (238) pour fournir une invite sont configurés afin de fournir ladite invite supplémentaire pour permettre à un utilisateur de sélectionner une portion spécifique parmi ladite ou lesdites portion(s) de texte traduite(s) de remplacement supplémentaire(s) pour remplacer une portion originale correspondante de la communication basée texte ou de refuser la totalité de ladite ou desdites portion(s) de texte traduite(s) de remplacement supplémentaire(s) grâce à quoi ladite portion de texte originale correspondante est conservée.

17. Le dispositif de communication sans fil de n'importe laquelle des revendications 14 à 16, dans lequel le composant de composition est configuré pour composer une partie principale du texte de message basé texte dans la deuxième langue et pour composer des portions devant être traduites dans la première langue.

18. Le dispositif de communication sans fil de la revendication 14, dans lequel le dispositif de communication sans fil (104 ; 200) comporte de plus des moyens pour remplacer la portion de texte par le texte traduit reçu du dispositif de service de traduction dans la communication en cours de composition.

19. Le dispositif de communication sans fil de la revendication 18, dans lequel le dispositif de communication sans fil comprend une interface utilisateur (222, 232, 236) pour permettre à un utilisateur de confirmer le remplacement de la portion du texte devant être traduite par le texte traduit.

20. Le dispositif de communication sans fil de la revendication 19, dans lequel le dispositif de communication sans fil est configuré afin d'obtenir au moins une variante de texte traduit de remplacement de la part du moyen de service de traduction et dans lequel l'interface utilisateur est adaptée pour confirmer soit le texte traduit, soit l'au moins une variante de texte de remplacement comme texte de remplacement pour la portion de texte devant être traduite.

21. Un support lisible par ordinateur comportant des moyens de code exécutables par un processeur (238) d'un dispositif de communication sans fil pour amener ledit dispositif de communication sans fil à implémenter le procédé de n'importe lesquelles des revendications 1 à 10.
